# EUROPEAN PATENT APPLICATION

(11) **EP 4 571 501 A1**
(43) Date of publication of application: **18.06.2025**
(21) Application number: 23851789.0
(22) Date of filing: 07.08.2023
(51) Int. Cl.: G06F 9/451, G06F 3/01

(54) **METHOD AND APPARATUS FOR DISPLAYING VIRTUAL DISPLAY INTERFACE IN EXTENDED-REALITY SPACE**

(30) Priority: 11.08.2022 CN 202210960732
(71) Applicant: Beijing Zitiao Network Technology Co., Ltd., Beijing 100190 (CN)
(72) Inventor: CHENG, Lin, Beijing 100028 (CN); RAO, Xiaolin, Beijing 100028 (CN)
(74) Representative: Dentons UK and Middle East LLP
(86) International application number: PCT/CN2023/111560
(87) International publication number: WO 2024/032568

(57) **Abstract**

The embodiments of the present disclosure relate to the technical field of smart devices. Provided are a method and apparatus for displaying a virtual display interface in an extended-reality space. The method comprises: acquiring map information of a real space by means of an image collection device; generating an extended-reality space by means of a rendering engine and on the basis of the map information of the real space; and determining a target position of a virtual display interface in the extended-reality space, and displaying the virtual display interface at the target position, wherein the size of the virtual display interface is related to the target position where the virtual display interface is located, and a visual range of a user. The embodiments of the present disclosure are used for solving the problem of the effect of a virtual display interface viewed by a user being poor.

## Description

### CROSS-REFERENCE TO RELATED APPLICATIONS

The present disclosure is based on and claims the priority to the Chinese Patent Application No. 202210960732.X entitled "METHOD AND APPARATUS FOR DISPLAYING VIRTUAL DISPLAY INTERFACE IN EXTENDED-REALITY SPACE" and filed on August 11, 2022, the disclosure of which is incorporated by reference herein in its entirety.

### TECHNICAL FIELD

The present disclosure relates to a technical field of smart devices, in particular to a method and apparatus for displaying a virtual display interface in an extended-reality space.

### BACKGROUND

Extended reality refers to that a real scene is combined with virtual content by means of a computer, to create a man-machine interactive extended-reality environment. In some scenes, it is required to present some virtual display interfaces, such as a GUI (Graphical User Interface), in the extended-reality environment.

### SUMMARY

Embodiments of the present disclosure provide the following technical solutions:

In a first aspect, an embodiment of the present disclosure provides a method for displaying a virtual display interface in an extended-reality space, comprising:
obtaining map information of a real space by means of an image acquisition device;
generating an extended-reality space by means of a rendering engine based on the map information of the real space; and
determining a target position of a virtual display interface in the extended-reality space, and displaying the virtual display interface at the target position, wherein a size of the virtual display interface is related to the target position where the virtual display interface is located and a visual range of a user.

As an optional implementation of the embodiment of the present disclosure, the determining a target position of a virtual display interface in the extended-reality space and displaying the virtual display interface at the target position comprises:
determining distance information between the virtual display interface and an initial position of a head-mounted device according to attribute information of the virtual display interface, determining the target position of the virtual display interface in the extended-reality space based on the distance information, and displaying the virtual display interface at the target position.

As an optional implementation of the embodiment of the present disclosure, before the determining distance information between the virtual display interface and an initial position of a head-mounted device according to attribute information of the virtual display interface, the method further comprises:
receiving a call-out instruction for the virtual display interface, and obtaining the attribute information of the virtual display interface based on the call-out instruction.

As an optional implementation of the embodiment of the present disclosure, the method further comprises:
receiving a reset instruction, and returning to perform the obtaining map information of a real space by means of an image acquisition device.

As an optional implementation of the embodiment of the present disclosure, a size of the virtual display interface in a horizontal direction is determined based on the distance information and a preset viewing angle in the horizontal direction, and a size of the virtual display interface in a vertical direction is determined based on the distance information and a preset viewing angle in the vertical direction.

As an optional implementation of the embodiment of the present disclosure, the method further comprises:
detecting movement of a head-mounted device in the extended-reality space, and adjusting the size of the virtual display interface based on displacement of the movement.

As an optional implementation of the embodiment of the present disclosure, the detecting movement of a head-mounted device in the extended-reality space and adjusting the size of the virtual display interface based on displacement of the movement comprises:
reducing the size of the virtual display interface if the head-mounted device moves in the extended-reality space in a direction close to the virtual display interface; and
enlarging the size of the virtual display interface if the head-mounted device moves in the extended-reality space in a direction away from the virtual display interface.

In a second aspect, an embodiment of the present disclosure provides an apparatus for displaying a virtual display interface in an extended-reality space, comprising:
a map information obtaining unit, configured to obtain map information of a real space by means of an image acquisition device; an extended-reality space generating unit, configured to generate an extended-reality space by means of a rendering engine based on the map information of the real space; and
a virtual display interface displaying unit, configured to determine a target position of a virtual display interface in the extended-reality space, and display the virtual display interface at the target position, wherein a size of the virtual display interface is related to the target position where the virtual display interface is located and a visual range of a user.

As an optional implementation of the embodiment of the present disclosure, the virtual display interface displaying unit is specifically configured to, determine distance information between the virtual display interface and an initial position of a head-mounted device according to attribute information of the virtual display interface, determine the target position of the virtual display interface in the extended-reality space based on the distance information, and display the virtual display interface at the target position.

As an optional implementation of the embodiment of the present disclosure, the apparatus further comprises: a call-out instruction receiving unit, configured to receive a call-out instruction for the virtual display interface, and obtain the attribute information of the virtual display interface based on the call-out instruction.

As an optional implementation of the embodiment of the present disclosure, the apparatus further comprises: a reset instruction receiving unit, configured to receive a reset instruction, and return to perform the obtaining map information of a real space by means of an image acquisition device.

As an optional implementation of the embodiment of the present disclosure, a size of the virtual display interface in a horizontal direction is determined based on the distance information and a preset viewing angle in the horizontal direction, and a size of the virtual display interface in a vertical direction is determined based on the distance information and a preset viewing angle in the vertical direction.

As an optional implementation of the embodiment of the present disclosure, the apparatus further comprises: a virtual display interface size adjusting unit, configured to detect movement of a head-mounted device in the extended-reality space, and adjust the size of the virtual display interface based on displacement of the movement.

As an optional implementation of the embodiment of the present disclosure, the virtual display interface size adjusting unit is specifically configured to: reduce the size of the virtual display interface if the head-mounted device moves in the extended-reality space in a direction close to the virtual display interface; and enlarge the size of the virtual display interface if the head-mounted device moves in the extended-reality space in a direction away from the virtual display interface.

In a third aspect, an embodiment of the present disclosure provides an electronic device, comprising: a memory and a processor, the memory configured to store a computer program, and the processor configured to, when executing the computer program, cause the electronic device to implement the method for displaying a virtual display interface in an extended-reality space according to any one of the above implementations.

In a fourth aspect, an embodiment of the present disclosure provides a non-transitory computer-readable storage medium having stored thereon a computer program which, when executed by a computing device, causes the computing device to implement the method for displaying a virtual display interface in an extended-reality space according to any one of the above implementations.

In a fifth aspect, an embodiment of the present disclosure provides a computer program product comprising a program which, when executed on a computer, causes the computer to implement the method for displaying a virtual display interface in an extended-reality space according to any one of the above implementations.

In a sixth aspect, the present disclosure provides a computer program which, when executed by a processor, implements the method for displaying a virtual display interface in an extended-reality space according to any one of the above implementations.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present disclosure or technical solutions in the related art, the drawings that need to be called in the description of the embodiments or the related art are briefly described below, and it is apparent for those skilled in the art to obtain other drawings based on these drawings without creative labor.
Fig. 1 is a flowchart illustrating steps of a method for displaying a virtual display interface in an extended-reality space according to an embodiment of the present disclosure;
Fig. 2 is a first interface display diagram of a method for displaying a virtual display interface in an extended-reality space according to an embodiment of the present disclosure;
Fig. 3 is an interface display schematic diagram of a method for displaying a virtual display interface in an extended-reality space according to an embodiment of the present disclosure;
Fig. 4 is a second interface display diagram of a method for displaying a virtual display interface in an extended-reality space according to an embodiment of the present disclosure;
Fig. 5 is a third interface display diagram of a method for displaying a virtual display interface in an extended-reality space according to an embodiment of the present disclosure;
Fig. 6 is a fourth interface display diagram of a method for displaying a virtual display interface in an extended-reality space according to an embodiment of the present disclosure;
Fig. 7 is a schematic structural diagram of an apparatus for displaying a virtual display interface in an extended-reality space according to an embodiment of the present disclosure; and
Fig. 8 is a schematic diagram of a hardware structure of an electronic device according to an embodiment of the present disclosure.

### DETAILED DESCRIPTION

In order that the above objects, features and advantages of the present disclosure may be more clearly understood, the solutions of the present disclosure will be further described below. It should be noted that, without conflicts, the embodiments of the present disclosure and features in the embodiments may be combined with each other.

In the following description, numerous specific details are set forth in order to provide a thorough understanding of the present disclosure, but the present disclosure may be practiced otherwise than as described herein; it is to be understood that the embodiments disclosed in the specification are only a few embodiments of the present disclosure, and not all embodiments.

In the embodiments of the present disclosure, words such as "exemplary" or "for example" serve as an example, instance, or illustration. Any embodiment or design described as "exemplary" or "for example" in the embodiments of the present disclosure is not necessarily to be construed as preferred or advantageous over other embodiments or designs. Rather, the words such as "exemplary" or "for example" are intended to present relevant concepts specifically. Further, in the description of the embodiments of the present disclosure, "a plurality" means two or more unless otherwise specified.

In the related art, a size of the virtual display interface presented in an extended-reality environment is determined based on experience, but in the related art, the effect of the user viewing the virtual display interface is poor.

In view of this, the present disclosure provides a method and apparatus for displaying a virtual display interface in an extended-reality space, so as to solve the problem that the effect of the user viewing the virtual display interface is poor.

The method for displaying a virtual display interface in an extended-reality space according to the embodiment of the present disclosure comprises: firstly obtaining map information of a real space by means of an image acquisition device, then generating an extended-reality space by means of a rendering engine based on the map information of the real space, and finally determining a target position of a virtual display interface in the extended-reality space, and displaying the virtual display interface at the target position. Since a size of the virtual display interface is related to the target position where the virtual display interface is located and a visual range of a user, a more reasonable size of the virtual display interface can be determined according to the target position where the virtual display interface is located and the visual range of the user, thereby solving the problem that the effect of the user viewing the virtual display interface is poor.

In the extended-reality space, the virtual display interface is presented in a 360° surrounded three-dimensional space, and the virtual display interface is not limited by a physical equipment size any longer, so that in the present application, on this basis, in order to improve the viewing effect of the user viewing the virtual display interface, in the extended-reality space, the size of the virtual display interface is determined based on a display position of the virtual display interface and the visual range of the user, such that the size of the virtual display interface is set in a more reasonable way, and the effect of the user viewing the virtual display interface is improved.

The technical solution of the present disclosure may be applied to an extended-reality scene, wherein extended reality includes but is not limited to, AR (Augmented Reality), VR (Virtual Reality), MR (Mixed Reality), and the like. The technical solution of the present disclosure is described below with several embodiments.

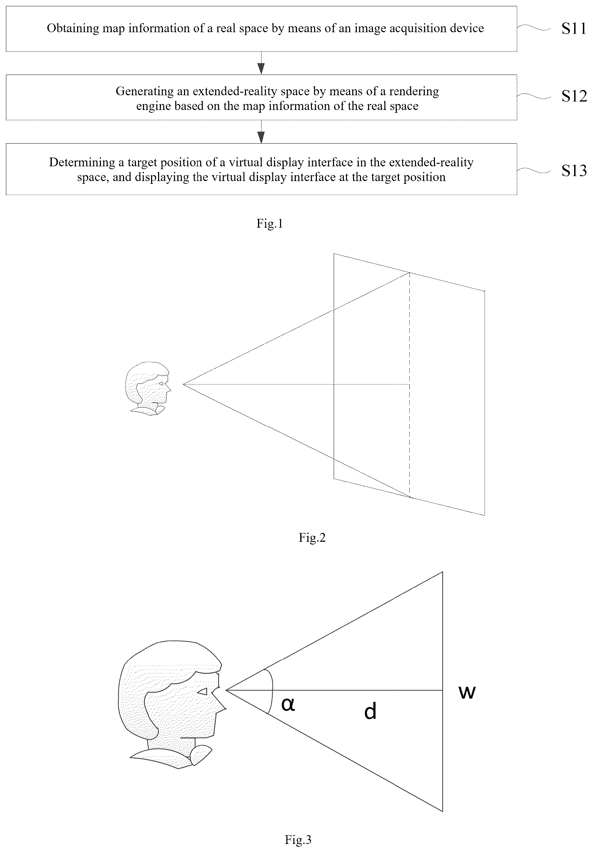

Fig. 1 is a schematic flowchart of a method for displaying a virtual display interface in an extended-reality space according to an embodiment of the present disclosure, and referring to Fig. 1, the method for displaying a virtual display interface in an extended-reality space comprises the following steps S11 to S13:
S11, obtaining map information of a real space by means of an image acquisition device.

The image acquisition device includes but is not limited to: a radar device, a device with a photographing function and the like, wherein the radar device can be a laser radar, and the device with a photographing function can be a camera, a video acquisition card, a scanner, or the like.

The map information of the real space includes but is not limited to, three-dimensional coordinate information of respective objects in the real space, relative position information of respective objects, or the like.

S12, generating an extended-reality space by means of a rendering engine based on the map information of the real space.

The rendering engine may be a 3D rendering engine such as unity, UE (Unreal Engine), or the like.

Specifically, based on the map information of the real space obtained in the above step, an extended-reality space is generated by means of a rendering engine. A head-mounted device can be in the form of glasses or the like, a position of the head-mounted device in a SLAM (simultaneous localization and mapping) environment can be taken as an initial position of human eyes for localization, mapping is performed by means of a 3D engine such as unity and UE, and accurate conversion is performed on distance data in the environment, thereby constructing an extended-reality space.

S13, determining a target position of a virtual display interface in the extended-reality space, and displaying the virtual display interface at the target position, wherein a size of the virtual display interface is related to the target position where the virtual display interface is located and a visual range of a user.

The determining a target position of a virtual display interface in the extended-reality space comprises but is not limited to the following possible implementation:
determining distance information between the virtual display interface and an initial position of a head-mounted device according to attribute information of the virtual display interface, determining the target position of the virtual display interface in the extended-reality space based on the distance information, and displaying the virtual display interface at the target position.

The attribute information of the virtual display interface may be a type of the virtual display interface, for example, the attribute information of the virtual display interface may be a cinema virtual display screen, an office virtual display screen, a shopping mall live-action map virtual display screen, a scenic spot sand-table virtual display screen, or the like. The distance information between the virtual display interface and the initial position of the head-mounted device can be determined according to historical experience values. Taking table 1 as an example, the relationship between the attribute information of the virtual display interface and the distance information between the virtual display interface and the initial position of the head-mounted device may be as shown in Table 1.

**Table 1**

| Attribute information of virtual display interface | Distance information |
|---|---|
| Cinema virtual display screen | 3 m |
| Office virtual display screen | 2 m |
| Shopping mall live-action map virtual display screen | 1 m |
| Scenic spot sand-table virtual display screen | 1.5 m |

Illustratively, taking Fig. 2 as an example, when the attribute information of the virtual display interface is a cinema virtual display screen, the distance information between the virtual display interface and the initial position of the head-mounted device is determined as 3 meters, the target position of the virtual display interface in the extended-reality space is determined according to the distance information, and the virtual display interface is displayed at the target position.

Further, the shape of the virtual display interface is described by taking a rectangle as an example, and it may also be other shapes, which is not limited in this disclosure. A size of the virtual display interface in a horizontal direction refers to a maximum length in the horizontal direction, for example, considering the rectangle, it refers to a length of a side in the horizontal direction, and a size of the virtual display interface in a vertical direction refers to a maximum length in the vertical direction, for example, considering the rectangle, it refers to a length of a side in the vertical direction.

The size in the horizontal direction is determined based on the distance information and a preset viewing angle in the horizontal direction, and the size of the virtual display interface in the vertical direction is determined based on the distance information and a preset viewing angle in the vertical direction.

Specifically, according to ergonomic calculation, a horizontal optimal visual range of both eyes is 60° and a vertical clear visual range is from 25° up to 30° down, when the head of a person is not rotated. Taking Fig. 3 as an example, the most suitable visual range w for each distance d is calculated according to the most comfortable ergonomic angle α: w=2d•tan(α/2), so that the optimal visual area for the human eye in the extended-reality space can be obtained. Therefore, a preset viewing angle α of 60° in the horizontal direction and a preset viewing angle α of 55° in the vertical direction may be set.

Illustratively, taking the size of the shopping mall live-action map virtual display screen as an example, the preset viewing angle α in the horizontal direction is 60° and the preset viewing angle α in the vertical direction is 55°, and, at a distance d=1 m, the size of the shopping mall live-action map virtual display screen in the horizontal direction is: w = 2 tan30° ≈ 1.15 m, and the size of the shopping mall live-action map virtual display screen in the vertical direction is: w = 2 tan27.5° ≈ 1.04 m. Thus, the clear visual range at 1 meter is: 1.15 * 1.04 m². This data can be used to present a canvas with an optimal visual range at 1 meter in the rendering engine, and so on elsewhere.

The method for displaying a virtual display interface in an extended-reality space according to the embodiment of the present disclosure comprises: firstly obtaining map information of a real space by means of an image acquisition device, then generating an extended-reality space by means of a rendering engine based on the map information of the real space, and finally determining a target position of a virtual display interface in the extended-reality space, and displaying the virtual display interface at the target position. Since a size of the virtual display interface is related to the target position where the virtual display interface is located and a visual range of a user, a more reasonable size of the virtual display interface can be determined according to the target position where the virtual display interface is located and the visual range of the user, thereby solving the problem that the effect of the user viewing the virtual display interface is poor.

As an optional implementation of the embodiment of the present disclosure, before determining distance information between the virtual display interface and an initial position of a head-mounted device according to attribute information of the virtual display interface, the following step may be further performed:
receiving a call-out instruction for the virtual display interface, and obtaining the attribute information of the virtual display interface based on the call-out instruction.

Illustratively, the call-out instruction for the virtual display interface may be an instruction issued by the user via voice, or an instruction issued by the user via a key on a terminal device.

In some embodiments, since the user may move in the extended-reality space, sometimes the user may be farther from the position of the virtual display interface, and sometimes the user may be closer to the position of the virtual display interface, in order that the user may have a better viewing effect, the present disclosure provides an implementation in which, the position information of the virtual display interface is re-adjusted by setting a reset instruction, wherein the reset instruction may be triggered by an interactive device, for example, the reset instruction may be triggered by a preset key on a handle or a preset key on the head-mounted device, may also be triggered by a key on the displayed virtual interactive interface, and may also be triggered by a voice instruction, which is not limited in the present disclosure.

After receiving the reset instruction, it is returned to perform S11-S13.

Specifically, each time when the virtual display device receives the reset instruction, the virtual display device returns to perform the steps of obtaining the map information of the real space by means of the image acquisition device, then generating the extended-reality space by means of the rendering engine based on the map information of the real space, and finally determining the target position where the virtual display interface is located in the extended-reality space and displaying the virtual display interface at the target position. The detailed implementation of the steps may refer to the description of the embodiment shown in Fig. 1, which is not repeated herein, and the target position of the virtual display interface is adjusted by the reset instruction, so that the user has a better viewing effect when viewing the virtual display interface.

The present disclosure further provides an implementation as follows: detecting movement of a head-mounted device in the extended-reality space, and adjusting the size of the virtual display interface based on displacement of the movement.

Specifically, the size of the virtual display interface is reduced if the head-mounted device moves in the extended-reality space in a direction close to the virtual display interface.

The size of the virtual display interface is enlarged if the head-mounted device moves in the extended-reality space in a direction away from the virtual display interface.

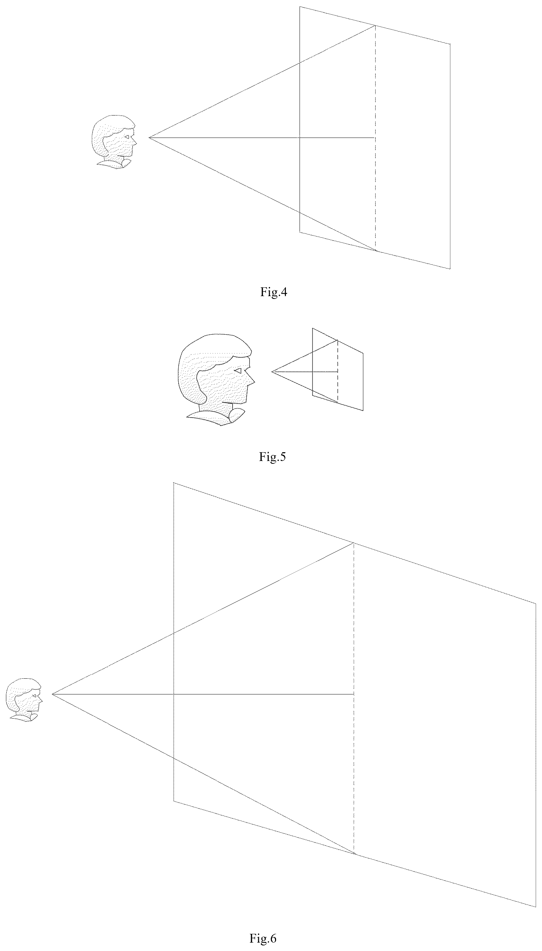

In order to avoid frequently adjusting the size of the virtual display interface, it may be set that the size of the display interface is adjusted after a distance moved in a preset direction is greater than a preset distance; for example, the preset distance may be set to 2 meters, and, assuming that the initial position is 3 meters, the initial size of the virtual display interface is as shown in Fig. 4; when the head-mounted device moves 2.5 meters in the direction close to the virtual display interface, the size of the virtual display interface is reduced, and the reduced size of the virtual display interface is specifically: tan30° in the horizontal direction, and tan27.5° in the vertical direction, as shown in Fig. 5; and when the head-mounted device moves 2 meters away from the virtual display interface, the size of the virtual display interface is enlarged, and the enlarged size of the virtual display interface is specifically: 10*tan30°, and 10*tan27.5° in the vertical direction, as shown in Fig. 6.

In order to avoid the user from feeling dizzy and the like due to the fact that the user adjusts the size of the virtual display interface in the moving process, the size of the virtual display interface can be adjusted after the head-mounted device is detected to be static, and the adjustment is not made in the moving process of the head-mounted device.

Further, the head-mounted device used in the embodiment of the present disclosure is an extended reality device based on 6 dof (degree of freedom) technology, and the 6 dof extended reality device may be glasses or other reasonable devices, and can detect a change in up-down, front-back, left-right displacement due to body movement, in addition to a change in the angle of view due to rotation of the head. Therefore, the embodiment of the present disclosure not only makes the user's eyes the most comfortable, but also can realize more comfortable steering, improving user experience.

The method for displaying a virtual display interface in an extended-reality space according to the embodiment of the present disclosure comprises: firstly obtaining map information of a real space by means of an image acquisition device, then generating an extended-reality space by means of a rendering engine based on the map information of the real space, and finally determining a target position of a virtual display interface in the extended-reality space, and displaying the virtual display interface at the target position. Since a size of the virtual display interface is related to the target position where the virtual display interface is located and a visual range of a user, the size of the virtual display interface can be determined according to the target position where the virtual display interface is located and the visual range of the user, thereby solving the problem that the effect of the user viewing the virtual display interface is poor.

Based on the same inventive concept, as an implementation of the method, an embodiment of the present disclosure further provides an apparatus for displaying a virtual display interface in an extended-reality space; the embodiment corresponds to the foregoing method embodiment, and for convenience of reading, details in the foregoing method embodiment are not described again one by one in this embodiment, but it should be clear that the apparatus for displaying a virtual display interface in an extended-reality space in this embodiment can correspondingly implement all contents in the foregoing method embodiment.

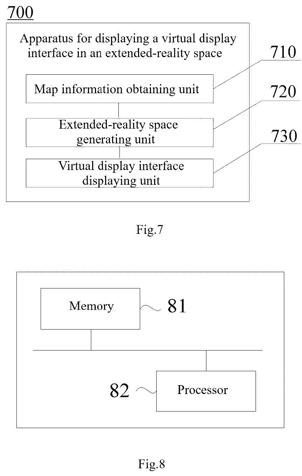

An embodiment of the present disclosure provides an apparatus for displaying a virtual display interface in an extended-reality space; Fig. 7 is a schematic structural diagram of an apparatus for displaying a virtual display interface in an extended-reality space, and as shown in Fig. 7, an apparatus 700 for displaying a virtual display interface in the extended-reality space comprises:
a map information obtaining unit 710, configured to obtain map information of a real space by means of an image acquisition device; an extended-reality space generating unit 720, configured to generate an extended-reality space by means of a rendering engine based on the map information of the real space; and
a virtual display interface displaying unit 730, configured to determine a target position of a virtual display interface in the extended-reality space, and display the virtual display interface at the target position, wherein a size of the virtual display interface is related to the target position where the virtual display interface is located and a visual range of a user.

As an optional implementation of the embodiment of the present disclosure, the virtual display interface displaying unit 730 is specifically configured to, determine distance information between the virtual display interface and an initial position of a head-mounted device according to attribute information of the virtual display interface, determine the target position of the virtual display interface in the extended-reality space based on the distance information, and display the virtual display interface at the target position.

As an optional implementation of the embodiment of the present disclosure, the apparatus further comprises: a call-out instruction receiving unit, configured to receive a call-out instruction for the virtual display interface, and obtain the attribute information of the virtual display interface based on the call-out instruction.

As an optional implementation of the embodiment of the present disclosure, the apparatus further comprises: a reset instruction receiving unit, configured to receive a reset instruction, and return to perform the obtaining map information of a real space by means of an image acquisition device.

As an optional implementation of the embodiment of the present disclosure, a size of the virtual display interface in a horizontal direction is determined based on the distance information and a preset viewing angle in the horizontal direction, and a size of the virtual display interface in a vertical direction is determined based on the distance information and a preset viewing angle in the vertical direction.

As an optional implementation of the embodiment of the present disclosure, the apparatus further comprises: a virtual display interface size adjusting unit, configured to detect movement of a head-mounted device in the extended-reality space, and adjust the size of the virtual display interface based on displacement of the movement.

As an optional implementation of the embodiment of the present disclosure, the virtual display interface size adjusting unit is specifically configured to: reduce the size of the virtual display interface if the head-mounted device moves in the extended-reality space in a direction close to the virtual display interface; and enlarge the size of the virtual display interface if the head-mounted device moves in the extended-reality space in a direction away from the virtual display interface.

The apparatus for displaying a virtual display interface in an extended-reality space according to this embodiment may execute the method for displaying a virtual display interface in an extended-reality space according to the foregoing method embodiment, with similar implementation principles and technical effects, which are not described herein again.

Based on the same inventive concept, an embodiment of the present disclosure further provides an electronic device. Fig. 8 is a schematic structural diagram of an electronic device according to an embodiment of the present disclosure, and as shown in Fig. 8, the electronic device according to this embodiment comprises: a memory 81 and a processor 82, the memory 81 configured to store a computer program, and the processor 82 configured to, when executing the computer program, implement the method for displaying a virtual display interface in an extended-reality space according to the above embodiment.

Based on the same inventive concept, an embodiment of the present disclosure further provides a non-transitory computer-readable storage medium having stored thereon a computer program which, when executed by a computing device, causes the computing device to implement the method for displaying a virtual display interface in an extended-reality space according to the above embodiment.

Based on the same inventive concept, an embodiment of the present disclosure further provides a computer program product comprising a program which, when executed on a computer, causes the computer to implement the method for displaying a virtual display interface in an extended-reality space according to the above embodiment.

Based on the same inventive concept, the present disclosure further provides a computer program which, when executed by a processor, implements the method for displaying a virtual display interface in an extended-reality space according to the above embodiment.

As will be appreciated by one of skill in the art, the embodiments of the present disclosure may be provided as a method, system, or computer program product. Accordingly, the present disclosure may take the form of an entirely hardware embodiment, an entirely software embodiment or an embodiment combining software and hardware aspects. Furthermore, the present disclosure may take the form of a computer program product embodied on one or more computer-usable storage media having computer-usable program codes embodied therein.

The processor may be a Central Processing Unit (CPU), other general purpose processors, a Digital Signal Processor (DSP), an Application Specific Integrated Circuit (ASIC), a Field-Programmable Gate Array (FPGA) or other programmable logic device, a discrete gate or transistor logic device, a discrete hardware component, etc. A general purpose processor may be a microprocessor or the processor may be any conventional processor or the like.

The memory may include forms such as volatile memory, Random Access Memory (RAM) and/or nonvolatile memory, such as Read Only Memory (ROM) or flash memory (flash RAM), in a computer readable medium. The memory is an example of the computer readable medium.

The computer readable medium includes both permanent and non-permanent, removable and non-removable storage medium. The storage medium may realize information storage by any method or technology, and the information may be computer-readable instruction, data structure, module of program, or other data. Examples of the computer storage medium include, but are not limited to, Phase Change Memory (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), flash memory or other memory technology, Compact Disc Read Only Memory (CD-ROM), Digital Versatile Disks (DVD) or other optical storage, magnetic cassette, magnetic disk storage or other magnetic storage devices, or any other non-transmission medium, which can be used to store information that can be accessed by a computing device. As defined herein, the computer readable medium does not include transitory computer readable media, such as modulated data signals and carrier waves.

Finally, it should be noted that: the above embodiments are only used for illustrating the technical solutions of the present disclosure, and not for limiting the same; although the present disclosure has been described in detail with reference to the foregoing embodiments, those of ordinary skill in the art will understand that: the technical solutions recited in the foregoing embodiments may still be modified, or some or all of the technical features therein may be equivalently replaced; such modifications or replacements do not make the essence of the corresponding technical solutions depart from the scope of the technical solutions of the embodiments of the present disclosure.

## Claims

1. A method for displaying a virtual display interface in an extended-reality space, comprising:
obtaining map information of a real space by means of an image acquisition device;
generating an extended-reality space by means of a rendering engine based on the map information of the real space; and
determining a target position of a virtual display interface in the extended-reality space, and displaying the virtual display interface at the target position, wherein a size of the virtual display interface is related to the target position where the virtual display interface is located and a visual range of a user.

2. The method according to claim 1, wherein the determining a target position of a virtual display interface in the extended-reality space and displaying the virtual display interface at the target position comprises:
determining distance information between the virtual display interface and an initial position of a head-mounted device according to attribute information of the virtual display interface, determining the target position of the virtual display interface in the extended-reality space based on the distance information, and displaying the virtual display interface at the target position.

3. The method according to claim 2, wherein before the determining distance information between the virtual display interface and an initial position of a head-mounted device according to attribute information of the virtual display interface, the method further comprises:
receiving a call-out instruction for the virtual display interface, and obtaining the attribute information of the virtual display interface based on the call-out instruction.

4. The method according to any of claims 1 to 3, further comprising:
receiving a reset instruction, and returning to perform the obtaining map information of a real space by means of an image acquisition device.

5. The method according to claim 2, wherein a size of the virtual display interface in a horizontal direction is determined based on the distance information and a preset viewing angle in the horizontal direction, and a size of the virtual display interface in a vertical direction is determined based on the distance information and a preset viewing angle in the vertical direction.

6. The method according to claim 1, further comprises:
detecting movement of a head-mounted device in the extended-reality space, and adjusting the size of the virtual display interface based on displacement of the movement.

7. The method according to claim 6, wherein the detecting movement of a head-mounted device in the extended-reality space and adjusting the size of the virtual display interface based on displacement of the movement comprises:
reducing the size of the virtual display interface if the head-mounted device moves in the extended-reality space in a direction close to the virtual display interface; and
enlarging the size of the virtual display interface if the head-mounted device moves in the extended-reality space in a direction away from the virtual display interface.

8. An apparatus for displaying a virtual display interface in an extended-reality space, comprising:
a map information obtaining unit, configured to obtain map information of a real space by means of an image acquisition device; an extended-reality space generating unit, configured to generate an extended-reality space by means of a rendering engine based on the map information of the real space; and
a virtual display interface displaying unit, configured to determine a target position of a virtual display interface in the extended-reality space, and display the virtual display interface at the target position, wherein a size of the virtual display interface is related to the target position where the virtual display interface is located and a visual range of a user.

9. An electronic device, comprising: a memory and a processor, the memory configured to store a computer program, and the processor configured to, when executing the computer program, cause the electronic device to implement the method for displaying a virtual display interface in an extended-reality space according to any one of claims 1 to 7.

10. A non-transitory computer-readable storage medium having stored thereon a computer program which, when executed by a computing device, causes the computing device to implement the method for displaying a virtual display interface in an extended-reality space according to any one of claims 1 to 7.

11. A computer program product comprising a program which, when executed on a computer, causes the computer to implement the method for displaying a virtual display interface in an extended-reality space according to any one of claims 1 to 7.

12. A computer program which, when executed by a processor, implements the method for displaying a virtual display interface in an extended-reality space according to any one of claims 1 to 7.
